# EUROPEAN PATENT SPECIFICATION

(11) **EP 0 619 170 B1**
(45) Date of publication and mention of the grant of the patent: **19.05.1999**
(21) Application number: 94103167.6
(22) Date of filing: 03.03.1994
(51) Int. Cl.: B29C 43/24, B29C 47/02, B29C 47/32, B29C 69/02, B32B 31/00, B29D 30/38

(54) **Method and apparatus for fabricating a rubberized wire sheet**
Verfahren und Vorrichtung zur Herstellung einer drahtverstärkten, gummierten Bahn
Procédé et dispositif pour la fabrication d'une feuille caoutchoutée renforcée par fils

(30) Priority: 19.03.1993 US 34457
(43) Date of publication of application: 12.10.1994
(73) Proprietor: THE GOODYEAR TIRE & RUBBER COMPANY, Akron, Ohio 44316-0001 (US)
(72) Inventor: Malin, Jerry (nmn), Akron, Ohio 44313 (US); Weaver, Douglas Raymond, Akron, Ohio 44313 (US)
(74) Representative: Leitz, Paul

(56) References cited:
- EP-A- 0 467 560
- EP-A- 0 478 258
- EP-A- 0 556 766
- FR-A- 2 281 831
- FR-A- 2 285 990
- GB-A- 580 838
- US-A- 2 608 503
- PATENT ABSTRACTS OF JAPAN vol. 6, no. 54 (C-097) 9 April 1982 & JP-A-56 166 243 (YOKOHAMA RUBBER CO.) 21 December 1981

## Description

### Background of the Invention

The invention relates to a method for forming fabric or cord reinforced sheets of elastomeric material and to a tire including such.

FR-A- 2 285 990, EP-A- 467 560 and EP-A- 478 258 describe methods and apparatus for manufacturing cord reinforced laminated material using calender roller systems.

The present invention has as object to provide a gum lip along one edge of a sheet of reinforced laminated material during the calendering process.

### Summary of the Invention

A method for fabricating a rubberized textile or cord reinforced sheet and a tire including such sheet is provided as defined in the appended claims. Preferred embodiments of the invention are recited in the dependent claims.

### Brief Description of the Drawings

Fig. 1 illustrates a side view of the apparatus for forming a rubberized wire sheet according to the present invention.
Fig. 2 illustrates a perspective view of a portion of the apparatus performing the preferred method of forming a rubberized wire sheet.
Fig. 3 is a perspective view taken along lines 3-3 of Fig. 2, the view illustrating the calender portion of the apparatus and the preferred method of forming a gum lip on the calenderized rubber wire sheet.
Fig. 3A is an enlarged view of the rubberized sheet shown in Fig. 3.
Fig. 4 is a partial view of the prior art extruder apparatus for forming a wire sheet.
Fig. 4A is an enlarged view of the rubberized sheet as shown in Fig. 4.
Fig. 5 is a cross-sectional view of a rubberized wire sheet according to one embodiment of the invention.
Fig. 6 is a cross-sectional view of a rubberized wire sheet according to a second embodiment of the invention.
Fig. 7 is a side view of the apparatus forming a rubberized wire sheet without extruder.
Fig. 8 is a perspective view taken along lines 8-8 of Fig. 7, the view illustrating the calender portion of the apparatus and the preferred method of forming a gum lip on the calenderized sheet.
Fig. 8A is an enlarged view of the sheet as shown in Fig. 8.
Fig. 9 is a perspective view of the plow knife.
Fig. 10 is an end view of the plow knife assembly taken along lines 10-10 of Fig. 1.
Fig. 10A is a top view of the plow knife assembly taken along lines 10A-10A of Fig. 1.
Fig. 11 is a cross-sectional view of a plurality of rubberized wire sheets assembled by lap splicing.
Fig. 11A is an enlarged view of the lap spliced sheets of Fig. 11.
Fig. 12 is a cross-sectional view illustrating a butt splice of the rubberized sheet.
Fig. 13 is a partial perspective cross-sectional view of a tire employing a rubberized wire sheet according to the present invention.

### Detailed Description

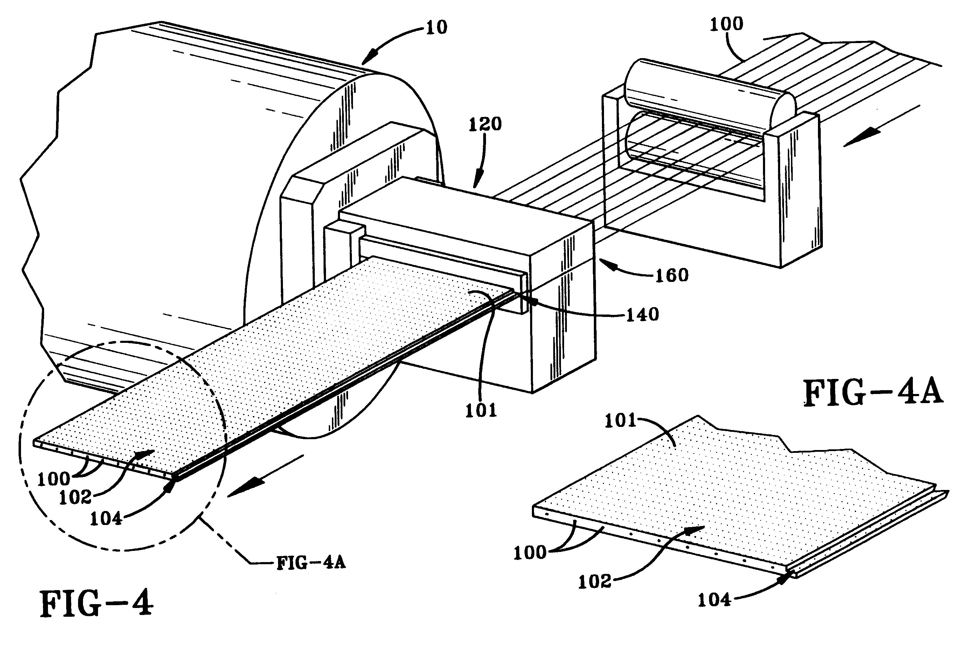

Figs. 4 and 4A illustrate a prior art method of forming a rubberized wire sheet or ribbon of material. The teachings of this prior arc method are disclosed in US-A-3,803,965, 3,888,713 and 4,274,821 The above-referenced patents are commonly owned by The Steelastic Company of Akron, Ohio.

This prior art method is summarized below to facilitate better appreciation of the improved methods employed in the present invention.

The standard prior art Steelastic method of extruding rubberized sheets starts with the supplying of wires 100. All wire stock is stored and let off from within a temperature and humidity-controlled creel room. The wire 100 is supplied as individual cords wound onto 36 kg (80-lb) spools. The spools are mounted on creel stands, each spool being placed on an individual horizontal pin. Some stands just have fixed pins, some have an air-controlled letoff brake to control wire tension. The wire cords pass over a series of rollers and through a set of ceramic eyelets. The wires 100 are all grouped together into a narrow sheet of wires, just before they pass through a window out of the creel room. They remain in this horizontal sheet right into the extrusion section of the process.

The sheet of wires 100 enters a machined extrusion head 120. This head is split into two parts along a horizontal plane. A cold feed extruder 10 is attached to the head 120 at a right angle to the wire path. The head 120 is designed to turn the rubber flow and to cause it to flow around and in between the wires 100, completely coating the wire sheet. The head 12o also holds the wire die 140 and insert 160 in place. The insert is drilled to the desired wire spacing for a given wire code. All the wires 100 are individually threaded through this insert.

The die 140 holds the insert 160, and both are held in place by the head 120. The rubber 101 flows around the wire 100 as it passes through the head, forming the extruded sheet 102. The die 140 also may preferably form a small "lip" 104 along one edge of the sheet. This lip 104 is necessary for lap-splicing the extruded sheet 102 later in the process. Alternatively, the die 140 may simply form the sheet 102 with no "lip" in which case the sheet 102 may be butt spliced in a later process.

The extruder speed is controlled by a pressure control system. The pressure of the rubber in the head is read by a transducer. The control system regulates the extruder screw speed to maintain the desired head pressure. The head 120, the extruder screw, and the extruder barrel are all temperature-controlled by external temperature control units.

After exiting the extruder 10, the extruded sheet enters the pull roll/cooling can assembly. This consists of a series of five rolls over which the sheet is fed. The last two rolls are driven by a constant-speed AC motor, which is coupled to the rolls through an electromagnetic clutch. These rolls pull the extruded sheet 102 away from the extruder section 10, and supply it to the cutting/splicing section. The speed of the roll is read by a tachometer, and the current to the clutch is varied by the control to maintain the desired setpoint speed.

Water is run through the inside of all five cooling can rolls, to bring the extruded sheet 102 down to room temperature.

After exiting the cooling can assembly, the sheet 102 enters a photoeye loop, and then enters the entry chute of the cutter/splicer unit. The cutter/splicer includes a pickup ram, a cutting knife, and an indexing conveyor. The ram is a long narrow assembly, slightly narrower than the strip width, which is powered by a DC drive. The bottom surface of the ram is drilled with small holes leading to the hollow core of the ram. A flexible hose connects the ram to an air/vacuum manifold. The ram is moved forward and back (along the direction of strip extrusion) by an indexing DC drive. It is also raised and lowered by a rack-and-pinion/air cylinder assembly.

The knife is a guillotine knife assembly. The cutting is done by a pair of knife blades - a stationary lower blade, and an upper blade, which is raised and lowered by an air cylinder. The upper blade unit pivots at one end, and is backed by a set of springs at the other end. The blades cut in a scissors action.

The indexing conveyor is a horizontal table equipped with a 91,5cm (36") or less than 1 meter wide conveyor belt. The belt is advanced by an indexing DC drive. The entire conveyor assembly can be rotated in the horizontal plane. This allows any desired belt cord angle to be produced.

In operation, the ram starts in the up position, advances over the end of the extruded sheet in the lead-in chute, lowers onto the extruded sheet, vacuum is applied to the ram (causing the extruded sheet to stick to it), the ram is raised and retracted (pulling the sheet forward through the gap between the knife blades), the ram is lowered to the indexing conveyor, the upper knife blade drops (cutting the sheet), air is applied to the ram (causing the sheet to be released), the ram raises, and the conveyor indexes forward. The conveyor indexing distance is adjusted so that when the ram brings the next section of sheet down to the conveyor, the leading edge of the sheet is pushed onto the "lip" of the previous piece, causing a lap splice to be formed. As this process repeats, a belt of the desired final width and belt angle is produced.

Each of the above described apparatus are fully illustrated and described in the referenced Steelastic patents and are ancillary to the preferred method of practicing the present invention and, therefore, not illustrated herein.

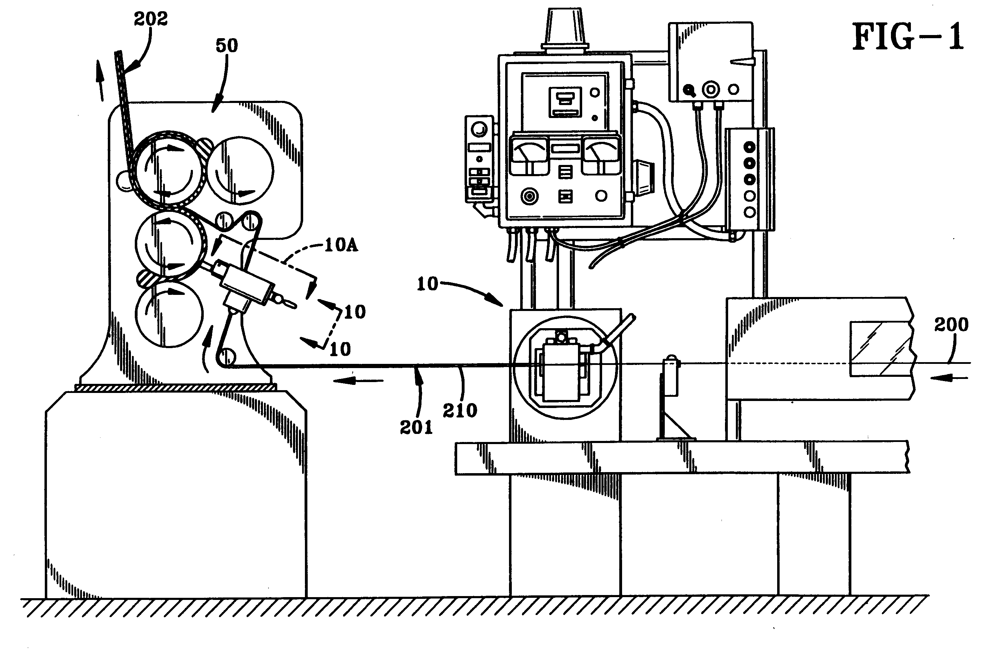

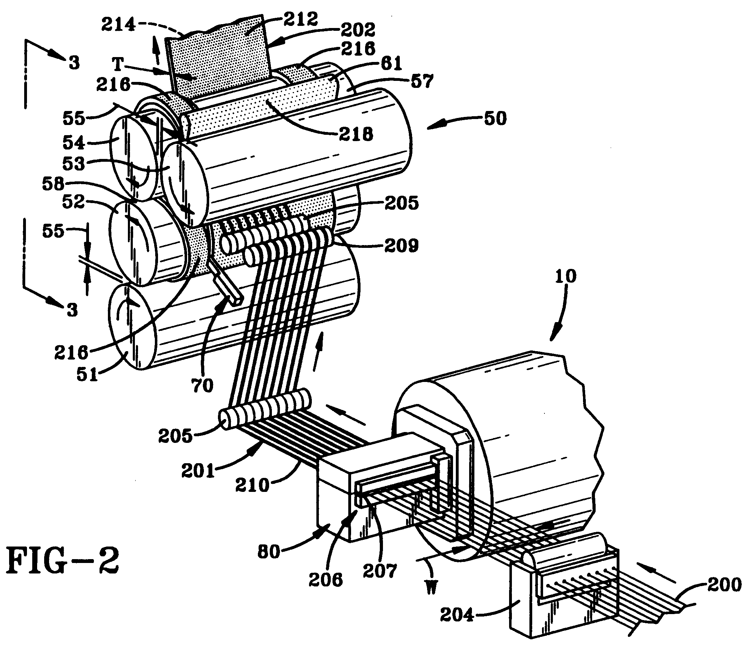

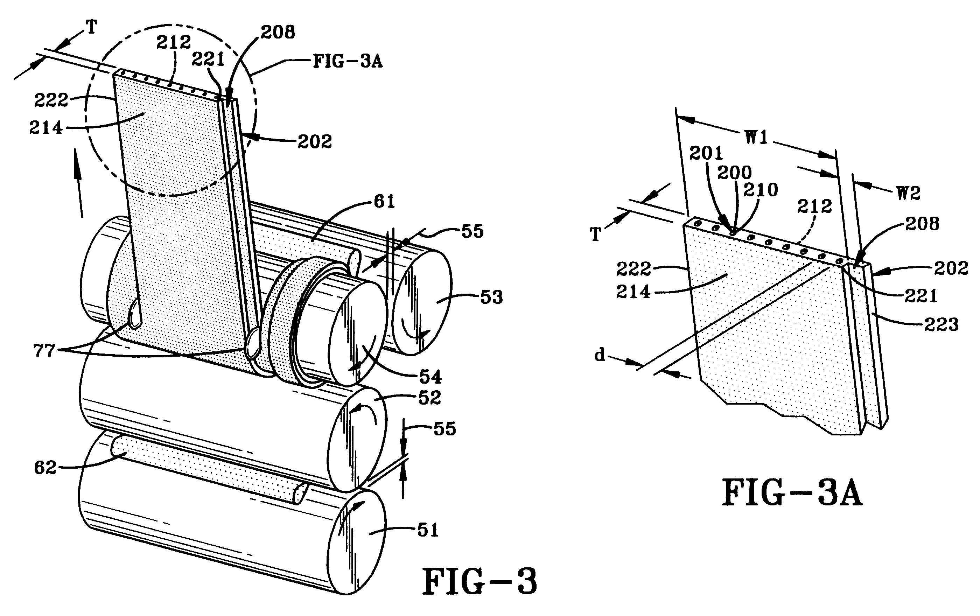

As illustrated in Figs. 1 through 3A, the improved method and apparatus for forming a rubberized sheet 202 is illustrated. The apparatus includes much of the above described equipment and a calender 50 and a modified extruder die 206.

In the preferred embodiment, the wires 200 are fed from the creel room through an aligning fixture 204 and then into the modified extruder die 206. The modified die is designed with an opening 207 for each wire 200. As each wire 200 passes through the die, it is coated with a rubber compound 210. The rubberized wires 201 are then fed through an organizer or aligning rollers 205 prior to entering the calender 50.

The calender 50 is a small "inverted L" 4-roll calender. It includes 4 flat-face rolls 51,52,53,54 which are geared together and driven from a single DC drive system. The rolls 51,52,53,54 are cored and supplied with water for cooling and heating. The gap 55 between the rolls can be adjusted to alter the rubber gage thickness T.

Banks 61,62 of rubber are maintained between the bottom pair of rolls 51,52, and between the top pair of rolls 53,54. The rolls 51,52 form a bottom sheet 214 and the rolls 53,54 form a top sheet 212 of rubber, respectively. The bottom sheet of rubber 214 is separated with a brass "plow" knife 70 on the entrance side of the calender 50. This is needed for forming the "lip" 208 on the calendered sheet 202.

The rubberized wires 201 pass under and around organizer rolls 205, and turn from the horizontal plane and angles up to an idler roll 209 on the entrance side of the calender 50. The rubberized wires 201 turn around the idler 209, and pass under and around another organizer roll 205, and then pass between the center two rolls 52,54 of the calender 50. At this point the upper and lower sheets 212,214 of rubber are laminated onto the rubberized wires 201.

The sheet material 202 passes through to the other side of the calender. The sheet 202 is cut to width with a pair of cutting blades 77. The sheet 202 exits the calender 50, passes overhead on a series of idler rolls, and then enters the cooling can/pull roll assembly. The scrap material 216 stays on the calender roll and returns to the top bank 61 of rubber.

An important feature of the above-described method and apparatus is the ability to coat the wires 200 with a first compound 210 of rubber and then encapsulating the rubberized wires in a sheet of rubber of a second or differing rubber compound 218.

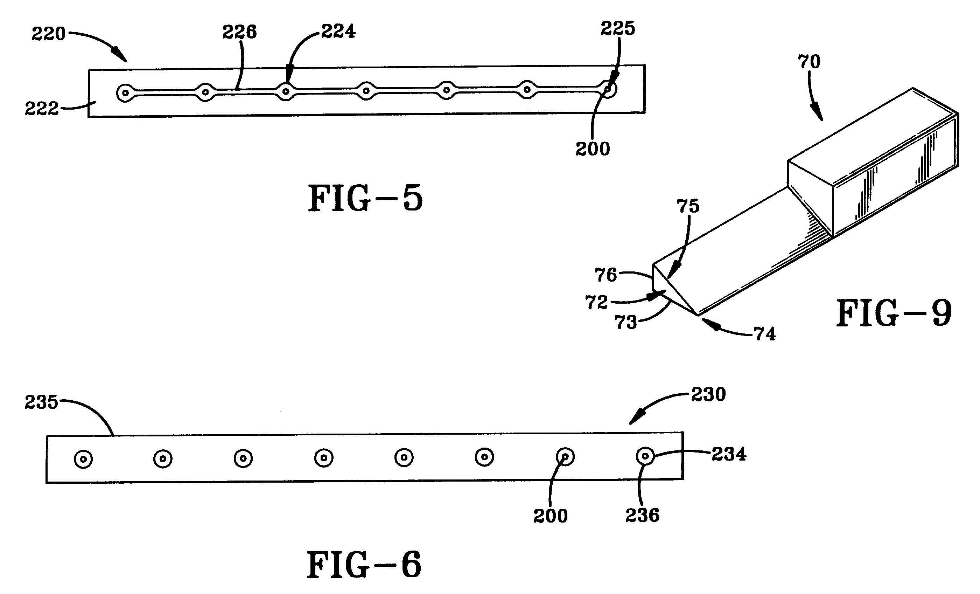

Fig. 5 illustrates a portion of a rubberized sheet 220 made according to one embodiment of the invention. The sheet 220 illustrates the calendered second compound 222 encapsulating a sheet 225 of rubberized wires 224 of the first compound 226. As illustrated, the rubberized wire sheet has edges adapted for butt splicing.

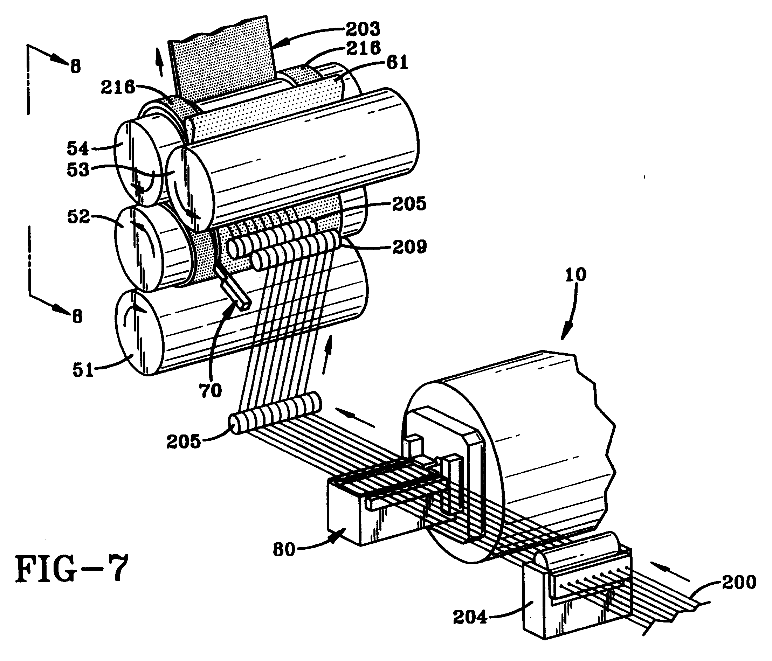

Fig. 6 is similar to that illustrated in Fig. 5; however, the sheet 230 has rubberized wires 234 which are individually coated with the first compound 236 and not joined into a web or sheet of first compound material 236. The embodiment illustrated in Fig. 6 is preferred because it minimizes the amount of first compound rubber 236 required. The first compound rubber 236 being processed through the extruder is believed to be more costly due to the required homogeneity needed to feed through the extruder die. The first compound 236 is of a lower viscosity than the second compound 235 generally. The second encapsulating compound 235 being formed by calendering is believed to be more economical.

In the illustrated Figs. 5 and 6, UH12 wire 200 was shown, the wire 200 being stranded 12x.20+1HT Open, 12EIP the overall wire diameter equaled .043 inches (1.1 mm) excluding the wrap wire, the wrap wire having a diameter of 0.006" (0.15 mm).

Although the method and apparatus described above can accommodate virtually any type of wire configuration, shape or size, it is understood to be particularly well suited in forming rubberized wire sheets for belts and plies of pneumatic tires.

It is further understood that the above apparatus and method permits the wires 200 to be coated with rubber having a high sulfur content. Those skilled in the art recognize that sulfur content above 2 parts per hundred rubber (phr) is considered high sulfur content for good wire adhesion 3 to 10 phr, preferably 5 phr is used. Although sulfur improves wire adhesion, high sulfur reduces aging resistance, resilience, interfacial adhesion and other physical properties. High sulfur content rubber compounds exhibit excellent adhesion to wire; however, the sulfur migrates in a process called blooming. The migrating sulfur forms a chalking residue at the surface of the belt or ply. This residue adversely affects the adhesion characteristic of the belt to the adjacent uncured components such as the tread. Heretofore, the use of such compounds was very difficult.

The present invention permits high sulfur content rubber to be coated onto the wire 200. The rubberized wire 201 is then encapsulated in a conventional lower sulfur content rubber compound 218. The resultant "blooming" effect is prevented because the sulfur in the high sulfur rubber cannot migrate to the oxidizing exterior surfaces prior to curing the rubber in a process called vulcanization.

Secondarily, the amount of first compound rubber 236 employed as illustrated in Fig. 6 can be varied from 5% to 90% of the total rubber content, preferably the first compound is less than 20 percent of the total rubber content while the calendered second compound 235 represents the remaining 80 percent or more. The calendered second compound 235 requiring less processing and handling can presumably be more economical.

The calender 50 providing the majority of the material permits the extruded material to be minimized. This in turn means that the extruder and calender can operate at or close to their maximum speeds. The calender being the faster component means that the overall apparatus can approach the speed capable of a calender. Thus, the linear throughput of sheet material can be expected to increase when compared to the prior art Steelastic extruder system 10.

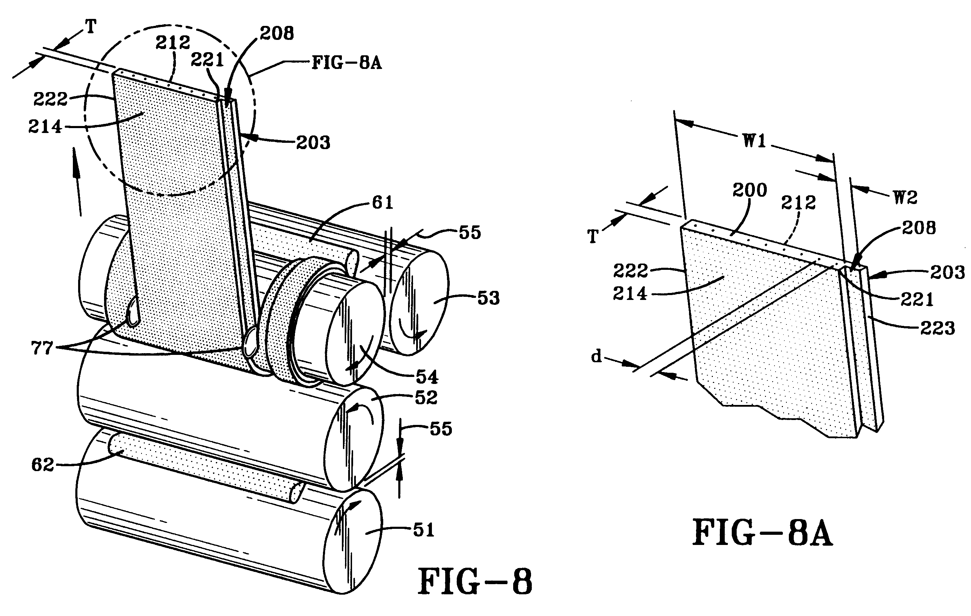

The apparatus of the present invention and as described above may be used without coating the wires with extruded rubber. Figure 7 illustrates the alternative method which permits the wires 200 to pass through the organizer roller with the extruder die head 80 opened or removed. As further illustrated in Figs. 8 and 8A, the uncoated wires 200 are then fed into the calender 50 and encapsulated between the two sheets 212,214 of calendered rubber, thus forming a rubberized wire sheet 203. In this application, the machine speed is limited by the calender speed which is believed to be the most efficient.

In practicing the invention, the prior art Steelastic pull roll/cooling can assembly was slightly modified. The electromagnetic clutch on the pull roll was switched to constant torque control rather than the prior art constant speed. This modification is needed because the calender 50 must establish the line speed. In the "constant torque" mode, the pull rolls slip from the drive motor when a preset torque is reached. This causes the pull roll assembly to act as a "follower" to the calender 50. This also maintains a relatively constant tension in the calendered sheet between the calender 50 and the pull roll.

The standard Steelastic pull roll control system was modified by adding another circuit board to the Eaton Dynamatic AC electromagnetic clutch/drive system. This is a standard option available from Eaton Corporation.

The above modification are disclosed to provide the best mode of practicing the invention; however, are not considered necessary for the practice of invention.

As illustrated in Figs. 1-3A, Fig. 7, 8 and 8A, the apparatus is capable of forming a gum lip 208 of material along one edge of the sheet 202,203.

The method of manufacturing a fabric or cord-reinforced laminate material, the fabric or cord 200 having a predetermined width W comprises the steps of:
a) feeding the fabric or cords 200 of predetermined width W through a roll calender;
b) preparing a first and second layer 214,212 respectively of elastomeric material by feeding the material through calender rollers 51,52,53,54;
c) forming a fabric or cord reinforced material on the calender rolls 51,52,53,54 by:
   i) cutting a first edge 221 on the first layer 214;
   ii) encapsulating the fabric or cords 200 between the first and second layers 212,214 of elastomeric material;
   iii) cutting a second edge 222 through the first and second layers 214,212 at an axial distance W1 from the first edge;
   iv) cutting a third edge 223, the third edge 223 cutting through the second layer 212 at an axial distance W2 beyond the first edge 221, the material extending beyond the first edge 221 forming a gum lip 208;
d) withdrawing the reinforced laminated material from the calender; and
e) cutting the material to length.

The above-described method can be employed in the apparatus wherein a first and second rubber or elastomeric compound is processed through the extruder and calender as shown in Figs. 1-3A or in a single elastomeric compound calendered procedure as illustrated in Figs. 7, 8 and 8A.

To form the gum lip 208 or step edge, a small brass wedge shaped "plow" knife 70 rides against the face of one of the lower rollers 52.

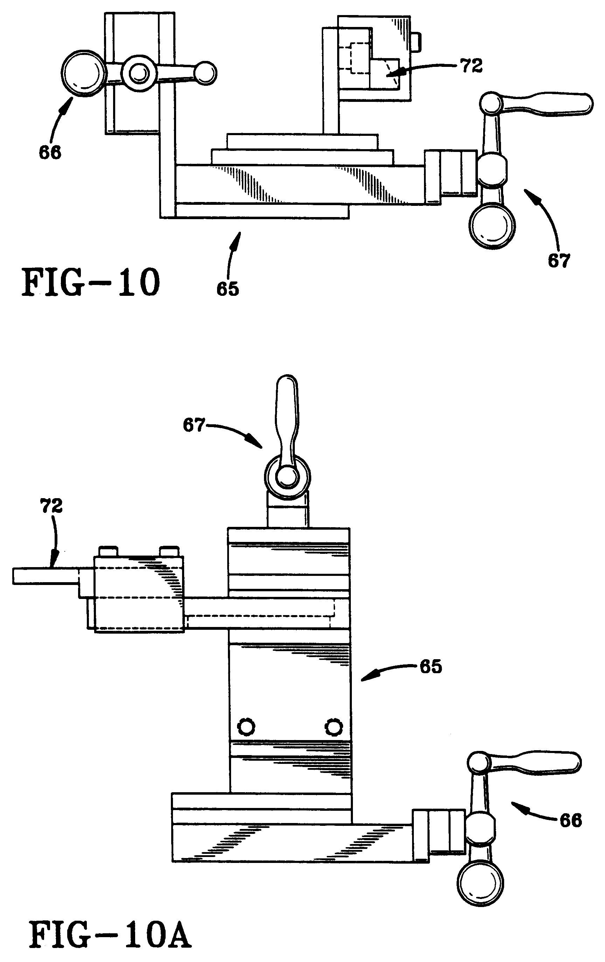

As illustrated in Fig. 9, the face 72 of the plow knife 70 is a narrow triangle, with one long side 73 of the triangular face 72 parallel to the direction of rubber stock travel on the roll 52. This side and the apex 74 of the triangular face 72 cut an edge 221 on the incoming lower rubber sheet 214. The other long side 75 of the triangular face 72 directs the scrap portion 216 of the lower rubber sheet 214 away to the side. When the lower rubber sheet 214 leaves the plow knife 70, a clean edge 221 has been formed on the process rubber sheet 214, and the process rubber sheet 214 and the scrap rubber sheet 216 have been separated by the width of the base side 76 of the plow knife triangular face 72.

The process and scrap portions 216 of the lower rubber sheet 214 then pass through the nip 58 of the calender 50. At this nip 58, the process portion of the lower rubber sheet 214 and the upper rubber sheet 212 (formed between the top two rolls 53,54) are calendered onto the wire 200. The calendered material is then cut on both sides with standard fixed knives 77, which brings the calendered material to its final width W1+W2. The slight difference in lateral position between the cutting edge of the plow knife 70 and the right fixed knife 77 creates the gum lip or stepped edge 208 that is needed for lap splicing the stock in the next process. The calendered material then leaves the face of the calender roll 50 and travels over several idler rolls into the next process. The scrap material 216 (consisting of two layers of rubber, laminated together at both edges of the roll), continues to adhere to the roll, and then enters the rubber bank 61 at the top nip 57 of the calender 50.

As shown in Fig. 10, the plow knife 70 is held to the side frame of the calender 50, using two tool slide mechanisms 66,67. These allow the position of the plow knife 72 to be adjusted, both in and out of the roll 52, and along the face of the roll. This permits precise adjustment of the "stepped edge" side 208 of the calendered material. Although a standard knife such as 77 could cut one edge 221 of the first layer 214 of rubber, it was determined that the scrap material 216 could not be allowed to pass through the nip. Since the scrap material 216 and the process sheet material 214 were only separated by the thin knife-cut, the scrap 216 and process sheet material 214 would stitch back together as they passed through the nip. This required an additional idler roller at the entrance to the nip, after the roller knife. The scrap material 216 would pass over this small idler roll, and be pulled away from the calender 50. This also required cutting the scrap 216 laterally after it left the knife and before it entered the nip, catching this cut edge by hand before it entered the nip, and pulling the scrap strip 216 manually over the idler roller, away from the calender assembly. The scrap strip would be pulled by hand for the duration of the run, and allowed to pile up on the floor. It would then be scrapped.

The plow knife assembly 65 simplifies the operation by eliminating the need for the idler roll, the cutting of the leading edge of scrap, and the need for an operator to be there to pull away the scrap strip. In the preferred set-up, the plow knife 72 is simply advanced into contact with the calender roll 52 by means of a hand-cranked tool slide 66. Side-to-side adjustment is achieved by means of the hand crank slide mechanism 67. The scrap material passes through the nip 58 of the calender 50, and continues with all other scrap material 216 in to the bank 61 at the top nip 57 of the calender 50.

Another advantage of this design is that almost all scrap strip 216, which would normally accumulate on the floor and then be discarded, is now returned to the top bank 61, where it is recycled into the process rubber. With use of this design, there is very little scrap associated with the calender process.

This design is also inherently safer than the use of a standard knife since the operator is not required to place his hands near the cutting knife or the nip of the calender.

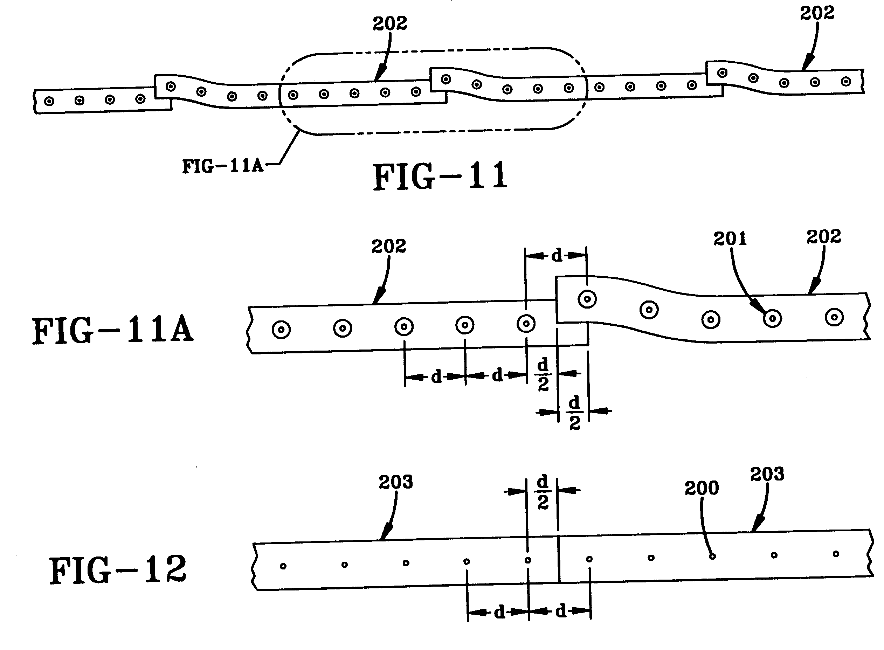

As shown in Fig. 11, a plurality of rubberized sheets 202 are shown assembled at lap splices. The plurality of assembled sheets form a rubberized wire reinforcing member such as a belt or a ply, such belts or plies being commonly used in the manufacture of pneumatic tires.

Fig. 11 illustrates the preferred wire spacing within each sheet 202. The wires are uniformly spaced a distance d, the distance and each edge is set at about 1/2 d. At the lap splice, the distance d is slightly inclined such that when the ply is stretched, a spacing of "d" is achieved at the splice.

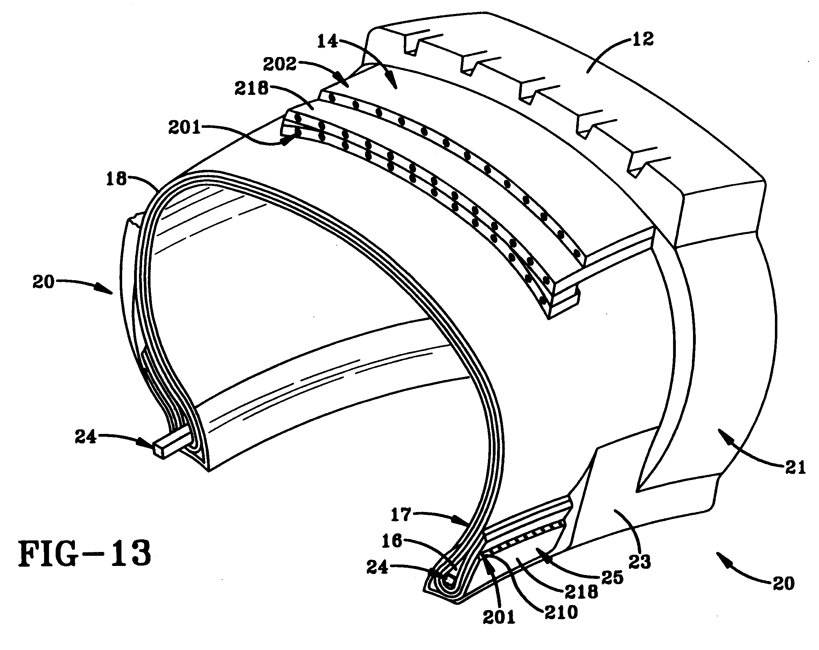

The rubberized wire sheet 202 can be employed in a tire 20 as illustrated in Fig. 13. The tire 20 has a ground engaging tread 12, a carcass 14 having a pair of annular beads 24, a pair of sidewall members 21 extending radially outward from the beads 24, and a pair of reinforcing plies 18 wrapped about the annular beads. The tire has at least one reinforcement member 202 having a plurality of axially spaced wires 201, each wire 201 being individually coated with a first elastomeric compound 210, each individually coated wire 201 being encapsulated in a layer of a second elastomeric compound. The reinforcing members 202 are commonly referred to as belts.

The tire 20 as illustrated includes an innerliner 17, an apex 16 located radially outward of the bead 24, a chipper 25, and an elastomeric chaffer 23. The chipper 25 may include rubberized wires 201, the wires 201 being coated with the first compound 210 and encapsulated within a second compound 218. Additionally, the plies 18 may have the coated wires 201 as reinforcing cords encapsulated as described above. In the preferred embodiment, it is desirable to employ a first compound having a high sulfur content as previously described while the second compound employs a more conventional level or even a reduced level of sulfur.

The tire 20 preferably has each wire of the reinforcement member coated with the first compound such that the wire having a diameter measured in the cross-section of the wire is coated by the first compound, the first compound having a diameter measured in the cross-section in the range of 150% to 400% of that of the wire. It is believed desirable that the first compound have a cross-sectional diameter of at least 200% of the wire diameter.

## Claims

1. A method of manufacturing fabric or cord-reinforced laminated material, the fabric or cords occupying a predetermined width (W), the method comprising the steps of:
a) feeding the fabric or cords (200) oocupying a predetermined width (W) through a roll calender;
b) preparing a first (214) and second (212) layer of elastomeric material by feeding the material through the calender rollers (51,52,53,54);
c) forming a reinforcing member on the calender rolls (51,52,53,54);
d) withdrawing the reinforced laminated material from the calender; and
e) cutting the material to length;
characterized in that the reinforced member is formed in step c) by
ci) cutting a first edge (221) on the first layer (214);
cii) encapsulating the fabric or cords (200) between the first and second layers (214, 212) of elastomeric material,
ciii) cutting a second edge (222) through the first and second layers at an axial distance W1 from the first edge,
civ) cutting a third edge (223), the third edge cutting through the second layer (212) at an axial distance W2 beyond the first edge (221), the material extending beyond the first edge forming a gum lip (208).

2. The method of claim 1, wherein the cords (200) are wires.

3. The method of claim 2, comprising the steps of:
a) orienting the wires (200) in spaced alig nment;
b) feeding the wires through a die (206), the die being connected to an extruder (10);
c) injecting a first elastomeric compound (210) from the extruder into the die (206), the first elastomeric compound circumferentially encapsulating each of the wires (200) with a coating while maintaining spaced alignment of the coated wires;
d) feeding the coated wires through a calender (50) while maintaining the spaced alignment;
e) applying said first layer (214) and said second layer (212) of a second elastomeric compound (218) to the coated wires (201), the wires coated with said first compound being encapsulated within the second compound to form a dual compound reinforcement member.

4. The method of claim 3 wherein the first elastomeric compound (210) is a high sulfur content material adapted for metal adhesion.

5. The method of claim 3 wherein the second compound (218) has low sulfur content and is adapted for elastomeric adhesion.

6. The method of claim 3 wherein the amount of first elastomeric compound (210,236) is between 5% and 90% of the total rubber content.

7. The method of claim 3 wherein the amount of first elastomeric compound (236) is less than 20% of the total rubber content, the calendered second compound (214,235) representing the remaining 80% or more.

8. A tire (20) having a ground engaging tread, and a carcass having a pair of annular beads (24), a pair of sidewall members (21) extending radially outward from the beads (24), a pair of reinforcing plies (18) wrapped about the annular beads (24), at least one reinforcement member (202) having a plurality of axially spaced wires (200), each wire (200) being individually coated with a first elastomeric compound (210), each individually coated wire being encapsulated in a layer of a second elastomeric compound (218), the tire being characterized by said reinforcement member (202) comprising a gum lip (208).

9. The tire of claim 8, wherein each wire (200) of the reinforcement member (202) has a diameter measured in the cross section of the wire (200) and the first compound (210) has a diameter measured in the cross section in the range of 150% to 400% of that of the wire (200).

10. The tire of claim 9 wherein the first compound (210) has a cross-sectional diameter of at least 200% of the wire diameter within the reinforcement member (202).

11. The tire of claim 8 wherein the reinforcement member (202) comprises a belt.

## Patentansprüche

1. Verfahren zur Herstellung von gewebe- oder kordverstärktem laminiertem Material, wobei das Gewebe oder die Korde eine vorbestimmte Breite einnehmen, wobei das Verfahren folgende Schritte umfaßt:
a) Zuführen des Gewebes oder der Korde (200), was eine vorbestimmte Breite (W) durch einen Walzenkalander in Anspruch nimmt,
b) Schaffen einer ersten (214) und zweiten (212) Lage von Elastomermaterial durch Zuführen des Materials durch die Kalanderwalzen (51, 52, 53, 54),
c) Ausbilden eines Verstärkungselementes an den Kalanderwalzen (51, 52, 53, 54),
d) Herausziehen des verstärkten laminierten Materials aus dem Kalander und
e) Schneiden des Materials auf Länge,
dadurch gekennzeichnet, daß das Verstärkungselement in Schritt c) ausgebildet wird durch
ci) Schneiden einer ersten Kante (221) an der ersten Lage (214),
cii) Einschließen des Gewebes oder der Korde (200) zwischen der erste und zweite Lage (214, 212) aus Elastomermaterial
ciii) Schneiden einer zweiten Kante (222) durch die erste und zweite Lage an einem axialen Abstand (W1) von der ersten Kante,
civ) Schneiden einer dritten Kante (223), wobei die dritte Kante durch die zweite Lage (212) in einem axialen Abstand (W2) über der ersten Kante (221) geschnitten ist, wobei das Material, das sich über die erste Kante erstreckt, eine Gummilippe (208) bildet.

2. Verfahren gemäß Anspruch 1, bei welchem die Korde (200) Drähte sind.

3. Verfahren gemäß Anspruch 2, umfassend die Schritte:
a) Ausrichten der Drähte (200) in beabstandete Ausrichtung bzw. Fluchtung,
b) Zuführen der Drähte durch eine Form (206), wobei die Form mit einem Extruder (10) verbunden ist,
c) Einspritzen einer ersten Elastomermischung (210) aus dem Extruder in die Form (206), wobei die erste Elastomermischung jeden der Drähte (200) umfänglich mit einer Ummantelung einschließt, während die beabstandete Ausrichtung der ummantelten Drähte beibehalten wird,
d) Zuführen der ummantelten Seite durch einen Kalander 50, während die beabstandete Ausrichtung beibehalten wird,
e) Aufbringen der ersten Lage (214) und der zweiten Lage (212) aus einer zweiten Elastomermischung (218) auf die ummantelten Drähte (201), wobei die Drähte mit der ersten Mischung mit der zweiten Mischung eingeschlossen werden, um ein Dual- bzw. Zweimischungsverstärkungselement zu bilden.

4. Verfahren gemäß Anspruch 3, bei welchem die erste Elastomermischung (210) ein hochschwefelhaltiges Material ist, welches zur Anhaftung an Metall angepaßt ist.

5. Verfahren gemäß Anspruch 3, bei welchem die zweite Mischung (218) einen geringen Schwefelgehalt hat und angepaßt ist zur Elastomeranhaftung.

6. Verfahren gemäß Anspruch 3, bei welchem die Menge der ersten Elastomermischung (210, 236) zwischen 5% und 90% des gesamten Kautschuk- bzw. Gummigehaltes liegt.

7. Verfahren gemäß Anspruch 3, bei welchem die Menge der ersten Elastomermischung (236) weniger als 20% des gesamten Kautschuk- bzw. Gummigehaltes ist, die kalandrierte zweite Mischung (214, 235) die verbleibenden 80% oder mehr darstellt.

8. Reifen (20) mit einer Lauffläche, welche mit dem Grund in Eingriff tritt, und einer Karkasse mit einem Paar von ringförmigen Wülsten (24), einem Paar von Seitenwandelementen (21), welche sich radial von den Wülsten (24) nach außen erstrecken, einem Paar von Verstärkungskorden bzw. - lagen (18), welche um die ringförmigen Wüste (24) gewickelt bzw. umschlungen sind, wenigstens einem Verstärkungselement (202) mit einer Vielzahl von axial beabstandeten Drähten (200), wobei jeder Draht (200) einzeln mit einer ersten Elastomermischung (210) ummantelt ist, jeder einzelne ummantelte Draht in einer Lage einer zweiten Elastomermischung (218) eingeschlossen ist, wobei der Reifen dadurch gekennzeichnet ist, daß das Verstärkungselement (202) eine Gummilippe bzw. einen Gummiansatz (208) umfaßt.

9. Reifen gemäß Anspruch 8, bei welchem jeder Draht (200) des Verstärkungselementes (202) einen Durchmesser, gemessen im Querschnitt des Drahtes (200), aufweist und die erste Mischung (210) einen Durchmesser, gemessen im Querschnitt, im Bereich von 150% bis 400% desjenigen des Drahtes (200) aufweist.

10. Reifen gemäß Anspruch 9, bei welchem die erste Mischung (210) einen Querschnittsdurchmesser von wenigstens 200% des Drahtdurchmessers in dem Verstärkungselement (202) hat.

11. Reifen gemäß Anspruch 8, bei welchem das Verstärkungselement (202) einen Gürtel umfaßt.

## Revendications

1. Procédé de fabrication d'un matériau stratifié renforcé par du tissu ou par des câblés, le tissu ou les câblés occupant une largeur prédéterminée (W), le procédé comprenant les étapes consistant à:
a) alimenter le tissu ou les câblés (200) occupant une largeur prédéterminée (W) à travers une calandre à cylindres;
b) préparer une première couche (214) et une seconde couche (212) d'une matière élastomère en alimentant la matière à travers les cylindres (51, 52, 53, 54) de la calandre;
c) former un élément de renforcement sur les cylindres (51, 52, 53, 54) de la calandre;
d) retirer de la calandre la matière stratifiée renforcée; et
e) découper la matière à longueur;
caractérisé en ce que l'élément renforcé est formé à l'étape c)
ci) en découpant un premier bord (221) sur la première couche (214),
cii) en encapsulant le tissu ou les câblés (200) entre les première et deuxième couches (214, 212) de la matière élastomère,
ciii) en découpant un second bord (222) à travers les première et seconde couches à une distance axiale W1 par rapport au premier bord,
civ) en découpant un troisième bord (223), le troisième bord étant découpé à travers la seconde couche (212) à une distance axiale (W2) au-delà du premier bord (221), la matière s'étendant au-delà du premier bord formant une lèvre de gomme (208).

2. Procédé selon la revendication 1, dans lequel les câblés (200) sont des fils métalliques.

3. Procédé selon la revendication 2, comprenant les étapes consistant à:
a) orienter les fils métalliques (200) dans un alignement espacé;
b) alimenter les fils métalliques à travers une filière (206), la filière étant raccordée à une extrudeuse (10);
c) injecter un premier composé élastomère (210) à partir de l'extrudeuse dans la filière (206), le premier composé élastomère encapsulant de manière circonférentielle chacun des fils métalliques (200) avec un enrobage tout en maintenant un alignement espacé des fils métalliques enrobés;
d) alimenter les fils métalliques enrobés à travers une calandre (50) tout en maintenant l'alignement espacé;
e) appliquer ladite première couche (214) et ladite deuxième couche (212) d'un deuxième composé élastomère (218) sur les fils métalliques enrobés (201), les fils métalliques enrobés avec ledit premier composé étant encapsulés dans le deuxième composé pour former un élément de renforcement à double composé.

4. Procédé selon la revendication 3, dans lequel le premier composé élastomère (210) est une matière à teneur élevée en soufre, conçue pour une adhérence à des métaux.

5. Procédé selon la revendication 3, dans lequel le deuxième composé (218) possède une faible teneur en soufre et est conçu pour une adhérence à des matières élastomères.

6. Procédé selon la revendication 3, dans lequel la quantité du premier composé élastomère (210, 236) représente une valeur entre 5% et 90% de la teneur totale en caoutchouc.

7. Procédé selon la revendication 3, dans lequel la quantité du premier composé élastomère (236) représente moins de 20% de la teneur totale en caoutchouc, le deuxième composé calandré (214, 235) représentant les 80% restants ou plus.

8. Pneumatique (20) possédant une bande de roulement entrant en contact avec le sol et une carcasse comportant une paire de talons annulaires (24), une paire d'éléments de flancs (21) s'étendant en direction radiale vers l'extérieur par rapport aux talons (24), une paire de nappes de renforcement (18) enroulées autour des talons annulaires (24), au moins un élément de renforcement (202) comportant plusieurs fils métalliques (200) espacés en direction axiale, chaque fil métallique (200) étant enrobé de manière individuelle, enrobé d'un premier composé élastomère (210), chaque fil métallique enrobé à titre individuel étant encapsulé dans une couche d'un deuxième composé élastomère (218), le pneumatique étant caractérisé par le fait que ledit élément de renforcement (202) comprend une lèvre de gomme (208).

9. Pneumatique selon la revendication 8, dans lequel chaque fil métallique (200) de l'élément de renforcement (202) possède un diamètre mesuré en section transversale du fil métallique (200) et le premier composé (210) possède un diamètre mesuré en section transversale dans le domaine de 150% à 400% de celui du fil métallique (200).

10. Pneumatique selon la revendication 9, dans lequel le premier composé (210) possède un diamètre en section transversale représentant au moins 200% du diamètre du fil métallique dans l'élément de renforcement (202).

11. Pneumatique selon la revendication 8, dans lequel l'élément de renforcement (202) comprend une ceinture.
